# EUROPÄISCHE PATENTSCHRIFT

(11) **EP 4 087 965 B1**
(45) Veröffentlichungstag und Bekanntmachung des Hinweises auf die Patenterteilung: **23.07.2025**
(21) Anmeldenummer: 20820098.0
(22) Anmeldetag: 03.12.2020
(51) Int. Cl.: D04H 1/4374, B32B 5/02, B32B 5/26, D04H 1/492, D04H 1/498, D04H 13/00, D04H 18/04

(54) **ANLAGE UND VERFAHREN ZUR HERSTELLUNG EINES EIN- ODER MEHRLAGIGEN VLIESES**
SYSTEM AND METHOD FOR PRODUCING A SINGLE- OR MULTI-LAYER NONWOVEN
INSTALLATION ET PROCÉDÉ POUR PRODUIRE UN NON-TISSÉ MONOCOUCHE OU MULTICOUCHE

(30) Priorität: 10.01.2020 DE 102020100424
(43) Veröffentlichungstag der Anmeldung: 16.11.2022
(73) Patentinhaber: Trützschler Group SE, 41199 Mönchengladbach (DE); Voith Patent GmbH, 89522 Heidenheim (DE)
(72) Erfinder: WEIGERT, Thomas, 65843 Sulzbach (DE); PÖHLER, Kai, 52391 Vettweiss (DE); THOMßEN, Sven, 28790 Schwanewede (DE)
(86) Internationale Anmeldenummer: PCT/EP2020/084374
(87) Internationale Veröffentlichungsnummer: WO 2021/139932

(56) Entgegenhaltungen:
- EP-A1- 3 118 361
- EP-B1- 1 929 080
- DE-A1- 102015 112 955

## Beschreibung

Die Erfindung betrifft eine Anlage und ein Verfahren zur Herstellung eines ein- oder mehrlagigen Vlieses.

Es ist durch die EP 1929080 B1 bekannt, lose Fasern mit einem Vlies zu verbinden, in dem die losen Fasern immer durch ein Band von unten gestützt und geführt werden und dabei gleichzeitig auf einem Vlies abgelegt werden. Dieses Verfahren und die dazugehörige Anlage sind sehr aufwändig, da eine absolut parallele Führung der Bänder über einen längeren Abschnitt erforderlich ist. Dies ist konstruktiv sehr aufwändig umzusetzen, da zwischen den Bändern eine konstante Spannung erforderlich ist und beide Bänder an jeder Stelle eine identische Geschwindigkeit aufweisen müssen, um keine unkontrollierten Verzüge in das Endprodukt zu bringen.

Die EP 3118361 A1 offenbart eine Krempelanlage, der in Materialflussrichtung eine Wetlaidanlage nachgeordnet ist. Um auf das unverfestigte Krempelvlies eine Schicht von nassen Fasern aufzubringen, ist zwischen der Krempelanlage und der Wetlaidanlage eine Verfestigungsvorrichtung für das Krempelvlies angeordnet.

Die DE 102015112955 A1 offenbart eine Wetlaidanlage, die einen ein- oder mehrschichtigen nassen Faserstoff kopfüber auf einem Transportband ablegt. Nachfolgend wird der nasse Faserstoff auf einem Vlies abgelegt, das mittels Abwickelstation oder Krempelanlage unterhalb des Transportbandes für den Faserstoffes in die Anlage eingeführt wird.

Aufgabe der vorliegenden Erfindung ist es, eine Anlage und ein Verfahren zur Herstellung eines ein- oder mehrlagigen Vlieses zu schaffen, die flexibel einsetzbar ist und mit der sowohl nassgelegte Fasern wie auch ein Krempelvlies alternativ oder zusammen verarbeitet werden können.

Die Erfindung löst die gestellte Aufgabe durch die Lehren nach Anspruch 1 und 10; weitere vorteilhafte Ausgestaltungsmerkmale der Erfindung sind durch die Unteransprüche gekennzeichnet.

Gemäß der technischen Lehre nach Anspruch 1 umfasst die Anlage
- einen Schrägsiebformer der ausgebildet ist, eine Bahn von nassgelegtem Faserstoff auf einem ersten umlaufenden Band abzulegen,
- ein weiteres Band, das ausgebildet ist, die Bahn von nassgelegtem Faserstoff von dem ersten umlaufenden Band zu übernehmen,
- einer in Materialtransportrichtung nachgeordneten Krempel, die ausgebildet ist, ein Krempelvlies in die Anlage einzuführen,
- einer in Materialtransportrichtung nachgeordneten Wasserstrahlverfestigung mit mindestens einem Wasserbalken, die ausgebildet ist, eine einzelne Bahn aus Fasern oder mehrere Bahnen aus Fasern zu verfestigen und/oder zu verbinden und/oder zu strukturieren,
- und einem in Materialtransportrichtung nachgeordneten Trockner,
wobei die Anlage ausgebildet ist, wahlweise ein ein- oder mehrlagiges Vlies herzustellen.

Nach diesem Ausführungsbeispiel ist die Anlage ausgebildet, wahlweise die nassgelegte Bahn aus Faserstoff oder das Krempelvlies, oder die Bahn aus Faserstoff mit dem Krempelvlies zu verarbeiten. Dabei ist es nicht notwendig, die nassgelegte Bahn aus Faserstoff kopfüber auf einem Transportband oder einem Vlies abzulegen. Vorzugsweise kann die nassgelegte Bahn aus Faserstoff mehrschichtig ausgebildet sein und entweder allein oder in Kombination mit dem Krempelvlies verarbeitet werden. Dabei ist die Anlage so flexibel, dass unter Abschaltung des Schrägsiebformers nur das Krempelvlies in der Wasserstrahlverfestigung verfestigt und/oder strukturiert wird.

Dabei kann die Bahn aus Faserstoff mittels des mindestens einen Bandes direkt zur Wasserstrahlverfestigung transportiert werden. Die Anordnung des Schrägsiebformers und der Krempel ist derart, dass beide unabhängig voneinander ein einlagiges Vlies erzeugen können. Dabei kann das einlagige Vlies wahlweise aus der Bahn aus Faserstoff bestehen, die sowohl einschichtig oder auch mehrschichtig ausgebildet sein kann, oder nur aus dem Krempelvlies bestehen.

In Materialtransportrichtung ist erst der Schrägsiebformer angeordnet, dem dann die Krempelanlage folgt. Dabei ist das Band zum Transport der Bahn aus Faserstoff zumindest teilweise unterhalb der Krempel angeordnet. Das Band kann dabei Unterflur geführt werden oder zwischen den Stützen der Krempel angeordnet sein.

Eine Ergänzung dieser Anlagenkonfiguration sieht vor, dass in Transportrichtung der Bahn aus Faserstoff vor oder unterhalb des Schrägsiebformers eine Abwickelstation angeordnet ist, mit der alternativ zur Bahn aus Faserstoff ein weiteres erstes Vlies in die Anlage eingeführt werden kann. Damit kann das Krempelvlies mit einem weiteren ersten Vlies kombiniert werden, das beispielsweise aus langen Fasern mit einer Faserlänge ≥ 40 mm besteht, deren Verarbeitung mit einem Schrägsiebformer nicht sinnvoll ist.

Vorzugsweise ist zwischen dem Band und dem Trockner mindestens ein weiteres umlaufendes Band angeordnet, das der Wasserstrahlverfestigung zugeordnet ist. Die Anordnung mehrerer Transportbänder zwischen dem Schrägsiebformer und dem Trockner ermöglicht die Anordnung von einer oder mehreren Abwickelstationen, so dass ein oder mehrere weitere zweite Vliese zwischen den Bändern in die Anlage eingeführt werden können.

Vorzugsweise sind vor der Wasserstrahlverfestigung mindestens zwei Bänder angeordnet, zwischen denen eine weitere Abwickelstation angeordnet ist, die ausgebildet ist, ein zweites Vlies in die Anlage einzuführen.

Dadurch ist die Anlage ausgebildet, ein einlagiges Vlies herzustellen, das wahlweise aus vier Bahnen unterschiedlichen Fasern bestehen kann, nämlich aus der Bahn aus Faserstoff, oder aus dem Krempelvlies, oder aus dem ersten Vlies, das vor oder unterhalb des Schrägsiebformers angeordnet ist, oder aus dem zweiten Vlies, das zwischen den Bändern vor dem Trockner in die Anlage eingeführt wird.

Vorzugsweise ist die Anlage ausgebildet, ein zweilagiges Vlies herzustellen, das aus der Bahn aus Faserstoff mit dem Krempelvlies oder mit dem ersten Vlies oder mit dem zweiten Vlies, bestehen kann. Alternativ ist auch ein zweilagiges Vlies wahlweise aus dem Krempelvlies mit dem ersten Vlies oder mit dem zweiten Vlies möglich. Alternativ ist ein zweilagiges Vlies aus dem ersten Vlies mit dem zweiten Vlies möglich.

Vorzugsweise ist die Anlage ausgebildet, ein dreilagiges Vlies herzustellen, das aus der Bahn aus Faserstoff mit dem Krempelvlies und dem zweiten Vlies, oder aus der Bahn aus Faserstoff mit dem Krempelvlies und dem ersten Vlies, oder aus dem zweiten Vlies mit dem Krempelvlies und dem ersten Vlies bestehen kann.

Vorzugsweise ist die Anlage ausgebildet, ein vierlagiges Vlies herzustellen, das aus der Bahn aus Faserstoff mit dem ersten Vlies und dem Krempelvlies und dem zweiten Vlies als Deckschicht besteht.

Die Wasserstrahlverfestigung ist ausgebildet, ein einzelnes Vlies oder mehrere Schichten von Fasern oder mehrere Vliese miteinander zu verfestigen, zu verbinden und/oder zu strukturieren. Vorzugsweise sind die Wasserbalken der Wasserstrahlverfestigung ausgebildet, das Wasser mit einem Druck von 40 bis 400 bar auf die Faserbahn zu spritzen. Mittels speziell ausgebildeter Düsenanordnung oder in Kombination mit einem oberen Strukturband, mit dem die Bahn als Faserstoff und/oder das Vlies gekammert werden, ist eine Strukturierung und damit mustergebende Oberfläche des Vlieses möglich. Alternativ kann die Verfestigung und Strukturierung auch auf einer nicht dargestellten Trommel mit einer aufgezogenen Strukturschale erfolgen, die vor dem Trockner angeordnet ist.

Es ergibt sich eine sehr flexible Anlage, bei der verschiedene Fasern mit unterschiedlichen Faserlängen in unterschiedlichen Flächengewichten eingeleitet und einzeln oder zusammen verarbeitet werden können. Die Anordnung von einem Schrägsiebformer und einer in Materialtransportrichtung nachfolgend angeordneter Krempel ist platzsparend und aufgrund der Führung des Transportbandes unterhalb der Krempel leicht und preiswert umzusetzen. Ein Teil des Transportbandes kann beispielsweise abgedeckt Unterflur angeordnet werden.

Eine umgekehrte Anordnung, also erst die Krempel und dann in Materialtransportrichtung den Schrägsiebformer in Linie anzuordnen kann zwar die gleiche Variation an ein- oder mehrschichtigen Vliesen erzeugen, ist aber aufgrund der Bahnführung des Krempelvlieses und der Beschickung des Schrägsiebformers mit Nachteilen verbunden, obwohl diese Anordnung offensichtlicher ist, da eine Krempel aus Platzgründen oft noch vor dem Schrägsiebformer anzuordnen ist.

Weitere, die Erfindung verbessernde Maßnahmen werden nachstehend gemeinsam mit der Beschreibung eines bevorzugten Ausführungsbeispiels der Erfindung anhand der Figuren näher dargestellt.

Es zeigen:
- Fig.1:: zeigt eine erste Ausführungsform der erfindungsgemäßen Anlage und des Verfahrens;
- Fig. 2:: zeigt eine zweite Ausführungsform der erfindungsgemäßen Anlage und des Verfahrens;
- Fig. 3:: zeigt eine dritte Ausführungsform der erfindungsgemäßen Anlage und des Verfahrens;
- Fig. 4:: zeigt eine vierte Ausführungsform der erfindungsgemäßen Anlage und des Verfahrens.

Die erfindungsgemäße Anlage 100 umfasst zumindest einen Schrägsiebformer 1, mindestens eine in Transportrichtung der Warenbahn nachgeordnete Vorrichtung zur Einführung einer weiteren Warenbahn, mindestens eine nachfolgend angeordnete Wasserstrahlverfestigung mit mindestens einem Wasserbalken 16 und einen Trockner 18.

Ein Schrägsiebformer 1 ist unterhalb eines umlaufenden Siebbandes 10 angeordnet. Das Siebband 10, das als endloses Band ausgeführt sein kann, läuft um verschiedene Walzen 12 herum und weist einen schrägen Abschnitt 11 auf, der in Laufrichtung des Siebbandes um einen Winkel ansteigt. Im Bereich des schrägen Abschnittes 11 ist unterhalb des Siebbandes 10 der Schrägsiebformer 1 angeordnet, auf dessen Belag 2 sich das Siebband 10 abstützt. Unterhalb des Belages 2 ist mindestens eine Saugzone 3 angeordnet, die mittels nicht dargestellter Pumpen unter Unterdruck gesetzt wird. Der Schrägsiebformer 1 kann mehrere Saugzonen 3 aufweisen, die mit unterschiedlichen Drücken bzw. Unterdrücken beaufschlagt werden. Die Unterdruckquellen können vorzugsweise als steuer-/regelbare Vakuumpumpen ausgeführt werden.

In diesem Ausführungsbeispiel werden über einen Stoffauflauf 8 mindestens eine oder mehrere übereinander angeordnete Fasersuspensionen auf das Siebband 10 gegeben. Jede Fasersuspension enthält neben Wasser einen bestimmten Gehalt an Feststoff, der wiederum aus Fasern und aus anderen Zuschlagstoffen besteht. Bei mehreren Fasersuspensionen sind zwischen ihnen nicht dargestellte Lamellen angeordnet, mit denen die Schichtdicke der Fasersuspensionen einzeln oder in Summe variiert werden kann. Da die Lamellen die Fasersuspensionen voneinander separieren, werden diese nacheinander auf dem Schrägsiebformer 1 entwässert. Damit wird eine Vermischung der Fasersuspensionen verhindert und die Lagenreinheit der einzelnen Schichten Faserstoff verbessert. Über die mindestens eine Saugzone in Verbindung mit den steuer-/regelbaren Vakuumpumpen kann jede Schicht einer Fasersuspension einem separaten Unterdruck ausgesetzt werden, womit unterschiedliche Mischungen von Wasser mit Fasern in jeder Fasersuspension verarbeitet werden kann.

In diesem Ausführungsbeispiel können die äußeren Fasersuspensionen, die bei der weiteren Verarbeitung die äußeren Schichten oder die Deckschicht für die mittlere Schicht an Fasersuspension bildet, zumindest teilweise aus kurzen synthetischen Fasern mit einer Faserlänge von 8 bis 12 mm wie beispielsweise Polyester, Polyamid, Polypropylen oder Polyolefin bestehen. Auch Fasermischungen aus synthetischen und natürlichen Fasern sind möglich. Ebenso können die äußeren Schichten auch aus 100 % Pulp bestehen. Die mittlere Fasersuspension kann aus natürlichen Fasern bestehen, die ein hohes Wasserrückhaltevermögen aufweisen, und vorzugsweise biologisch abbaubar sind.

Die Dicke der Lagen ist durch die Lamellen einstellbar, indem die Aufgabe der Fasersuspensionen über den Stoffauflauf 8 variiert werden kann. Bei einem Sandwich-Vlies können beispielsweise gleich dicke Lagen hergestellt werden, oder die Lagen können mit einer Abstufung von beispielsweise 10 %, 80 % und 10 % Dicke hergestellt werden. Indirekt lässt sich darüber auch das Flächengewicht jeder Lage Faserstoff 9 einstellen.

Selbstverständlich kann auch nur eine Fasersuspension aufgegeben werden, so dass sich nach dem Abziehen von Wasser eine einzige Lage von Fasern bildet. Diese Fasersuspension kann aus einer Mischung von Fasern mit einem hohen Anteil Pulp und einem kleineren Anteil aus kurzen synthetischen Fasern mit einer Faserlänge von 8 bis 12 mm wie beispielsweise Polyester, Polyamid, Polyolefin, Polypropylen oder Viskose oder Lyocell bestehen. Das Flächengewicht der trockenen Bahn aus Faserstoff 9 kann vorzugsweise 10 bis 60 g/m² betragen.

Das Siebband 10, das durchlässig für Flüssigkeiten und Gase ist, transportiert die mindestens eine Fasersuspension über den schrägen Abschnitt 11 über den Schrägsiebformer 1. Aufgrund der Schwerkraft und des Unterdruckes, der auf die mindestens eine Fasersuspension wirkt, wird die Fasersuspensionen entwässert, wodurch sich in diesem Beispiel eine Bahn aus Faserstoff 9 mit mindestens einer Lage Fasern bildet. Unterhalb der Saugzone 3 wird das Siebwasser 6 in einem Siebkasten 5 gesammelt und abgezogen.

Die Bahn aus Faserstoff 9 wird in Pfeilrichtung erst über einen horizontalen Abschnitt dann weiter über einen schräg abfallenden Abschnitt auf dem Band 10 transportiert. Nach dem schräg abfallenden Abschnitt wird die Bahn aus Faserstoff 9 mit seiner Unterseite auf ein weiteres umlaufendes Band 13 übergeben, das als Endlosband um mindestens zwei Walzen 14 läuft.

In Transportrichtung der Bahn aus Faserstoff 9 ist im ersten Ausführungsbeispiel eine Krempel 15 in der Anlage 100 angeordnet. Die Krempel 15 ist räumlich oberhalb des Bandes 13 angeordnet, so dass die nassgelegte Bahn aus Faserstoff 9 unabhängig von der Krempel 15 zu einer Wasserstrahlverfestigung mit mindestens einem Wasserbalken 16 und einer unter dem Band 13 angeordneten Absaugung 17 geführt werden kann. Oder anders ausgedrückt, das Band 13 wird unterhalb der ortsfest installierten Krempel 15 geführt und ist ausgebildet, die Bahn aus Faserstoff 9 direkt vom Schrägsiebformer zur Wasserstrahlverfestigung zu leiten. Dabei werden die eine oder mehrere Schichten aus dem Stoffauflauf 8 miteinander verfestigt. Bei mehreren Schichten ergibt sich ein mehrschichtiges Vlies 10, das nach der Wasserstrahlverfestigung im Trockner 18 getrocknet und ggfs. in einer Wickelstation 20 aufgewickelt wird.

Die Krempel 15 kann eine kardierte Warenbahn aus Fasern, ein Krempelvlies 15a, in die Anlage 100 einführen. Dies erfolgt vor der Wasserstrahlverfestigung, so dass mittels der Wasserbalken 16 eine Verbindung der Bahn aus Faserstoff 9 mit dem Krempelvlies 15a erfolgt. Die ein- oder mehrschichte Bahn aus Faserstoff 9 kann mit einer Decklage aus einem Krempelvlies 15a zu einem mehrlagigen Vlies 19 durch die Wasserstrahlverfestigung verbunden und im Trockner 18 getrocknet und ggfs. in einer Wickelstation aufgewickelt. Das Krempelvlies 15a kann beispielsweise aus Polyester, Viskose, einer Baumwollmischung oder einer Mischung aus synthetischen und/oder natürlichen Fasern bestehen. Vorzugsweise beträgt das Flächengewicht des Krempelvlieses 15a 20 bis 60 g/m².

Nach diesem Ausführungsbeispiel ist die Anlage ausgebildet, wahlweise die Bahn aus Faserstoff 9 oder das Krempelvlies 15a oder die Bahn aus Faserstoff 9 zusammen mit dem Krempelvlies 15a zu verarbeiten.

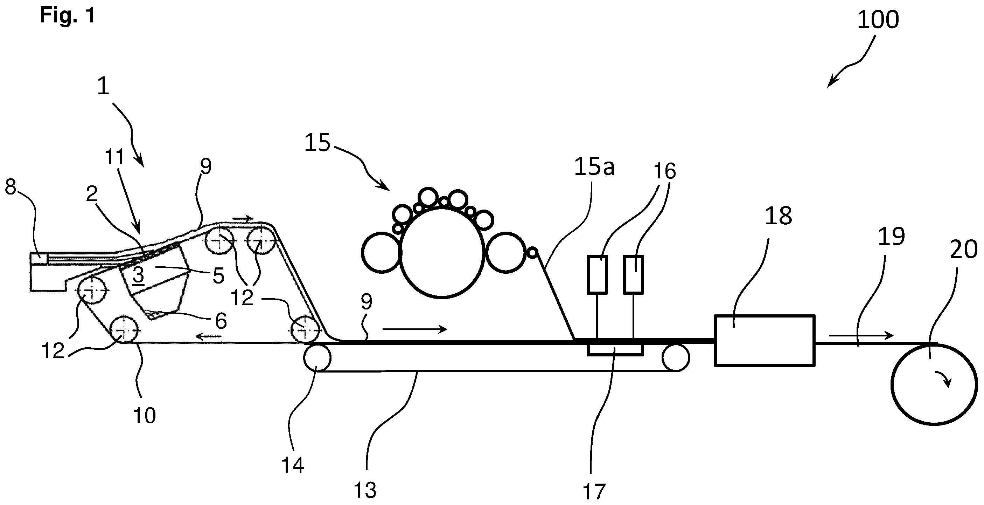

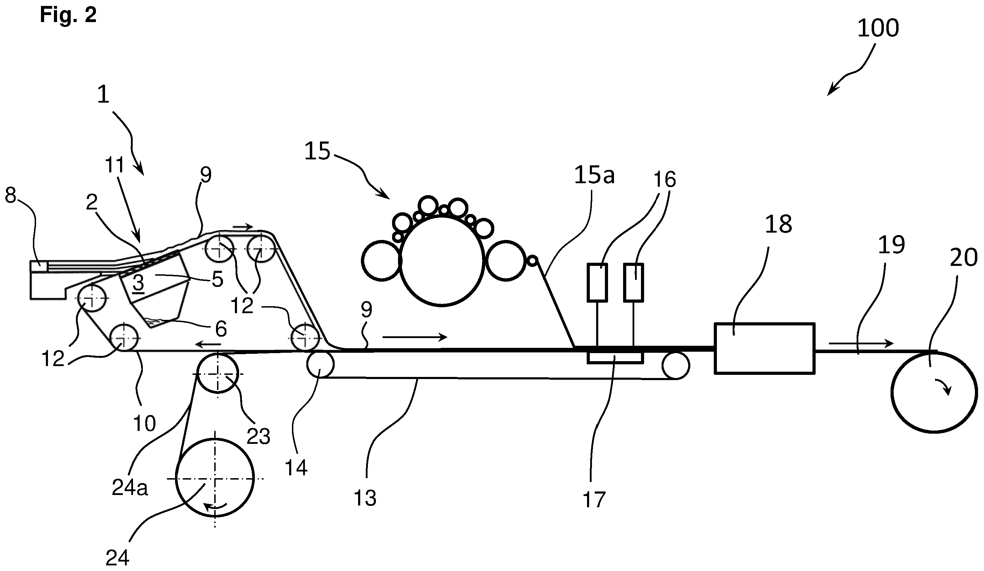

In dem Ausführungsbeispiel der Figur 2 ist im Vergleich zum Ausführungsbeispiel der Figur 1 zusätzlich eine Abwickelstation 24 mit einer Walze 23 in Transportrichtung der Bahn aus Faserstoff 9 vor dem Band 13 angeordnet. Die Abwickelstation 24 kann vor dem Schrägsiebformer 1 oder unterhalb (Unterflur) von diesem angeordnet sein und kann alternativ oder ergänzend zur nassgelegten Bahn aus Faserstoff 9 eine Warenbahn aus Fasern als Vlies 24a in die Anlage 100 einführen. In einer ersten Ausführungsform zur Figur 2 kann aufgrund der Anordnung der Abwickelstation 24 und der Laufrichtung des Bandes 10 in diesem Ausführungsbeispiel nur die Bahn aus Faserstoff 9 oder das Vlies 24a auf dem Band 13 abgelegt werden. Wird statt der Bahn aus Faserstoff 9 ein zweites Vlies 24a in die Anlage 100 eingeführt, kann dieses allein oder mit dem Krempelvlies 15a zusammen die Wasserstrahlverfestigung und den Trockner 18 durchlaufen und ggfs. auf der Wickelstation 20 als Vlies 19 aufgewickelt werden. Alternativ kann die Abwickelstation 24 so angeordnet sein, dass das Vlies 24a zwischen der Ablage der Bahn aus Faserstoff 9 und der Walze 14 auf das Band 13 abgelegt wird. In dieser Ausführungsform ist demnach ein dreilagiges Vlies 19 möglich, wobei das Vlies 24a und das Krempelvlies 15a die Decklagen für die Bahn aus Faserstoff 9 bilden. Je nach Ausführungsform kann das Vlies 24a beispielsweise aus Polyester, Viskose, einer Baumwollmischung oder einer Mischung aus synthetischen und/oder natürlichen Fasern bestehen. Wird das Vlies 24a als Alternative zur Bahn aus Faserstoff 9 in die Anlage 100 eingespeist, kann auch ein Vlies aus Tissue bzw. Papier verwendet werden. Vorzugsweise beträgt das Flächengewicht des Vlieses 24a 10 bis 60 g/m².

Nach diesem Ausführungsbeispiel ist die Anlage ausgebildet, ein ein- oder mehrschichtiges oder mehrlagiges Vlies 19 herzustellen, das nur aus der Bahn aus Faserstoff 9 bestehen kann, oder nur aus dem Vlies 24a, oder nur aus dem Krempelvlies 15a, oder aus der Bahn aus Faserstoff 9 mit dem Krempelvlies 15a, oder aus dem Vlies 24a mit dem Krempelvlies 15a, oder aus der Bahn aus Faserstoff 9 mit dem Krempelvlies 15 und dem Vlies 24a als Decklagen. Es ergeben sich dabei Materialkombinationen aus Fasern mit unterschiedlichem Flächengewicht mit unterschiedlicher Anzahl an Schichten und/oder einer bis drei Lagen. Die Anlage 100 ist dabei so konfiguriert, dass keine Überlappung oder ein paralleles Laufen von Bändern vorhanden ist, zwischen denen aufgrund Geschwindigkeitsunterschied ein Verzug des Vlieses möglich ist.

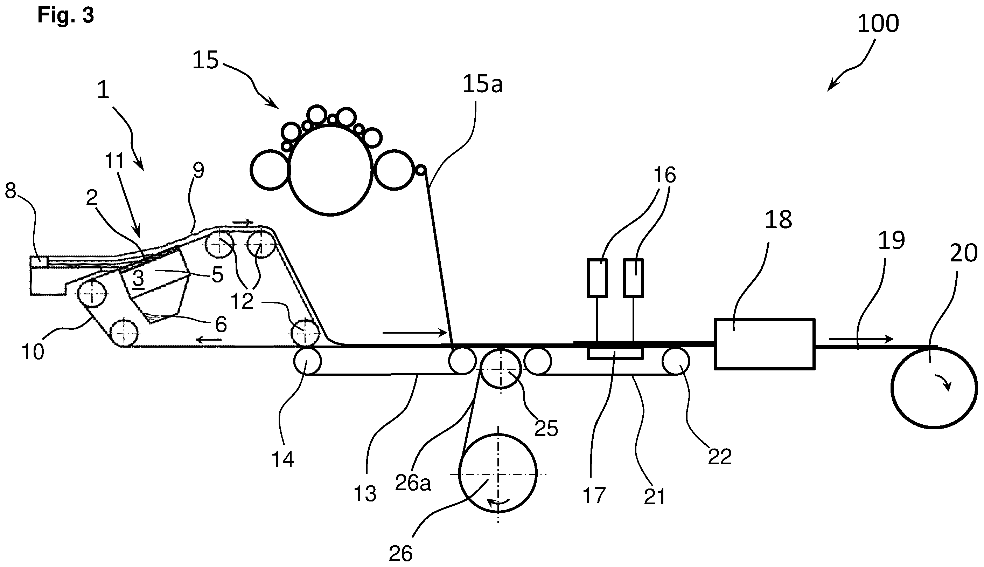

Das Ausführungsbeispiel der Figur 3 unterscheidet sich vom Ausführungsbeispiel der Figur 1 durch ein weiteres Band 21 zum Transport der Warenbahn. Zwischen dem Band 13 und dem Trockner 18 ist ein weiteres umlaufendes Band 21 um zwei Walzen 22 angeordnet, das der Wasserstrahlverfestigung zugeordnet ist. Oberhalb des Bandes 21 sind mindestens ein Wasserbalken 16 angeordnet und unterhalb des Bandes 21 eine zugehörige Absaugung 17. Zwischen den Bändern 13 und 21 ist eine weitere Abwickelstation 26 mit einer Walze 25 angeordnet, die in diesem Ausführungsbeispiel Unterflur angeordnet ist. In dieser Ausführungsform kann die Bahn aus Faserstoff 9 durch ein oben liegendes Krempelvlies 15a und durch ein untenliegendes Vlies 26a der Abwickelstation 26 gekammert werden, so dass beispielsweise ein dreilagiges Vlies herstellbar ist. Das Vlies 26a kann beispielsweise als ein Krempelvlies aus Fasern aus Polypropylen, Polyester oder aus Viskose oder aus einer Fasermischung aus synthetischen und/oder natürlichen Fasern mit einem Flächengewicht von 10 bis 50 g/m² bestehen.

Alternativ oder ergänzend kann eine weitere Abwickelstation 26 oberhalb des Bandes 13 in Transportrichtung der Warenbahn vor oder nach der Krempel 15 angeordnet sein und ist ausgebildet, eine Warenbahn aus Fasern bzw. ein weiteres Vlies in die Anlage 100 einzuleiten.

Es ergibt sich erfindungsgemäß eine flexible Anlage zur Herstellung eines ein- oder mehrschichtigen oder mehrlagigen Vlieses 19, das nur aus der Bahn aus Faserstoff 9 bestehen kann, oder nur aus dem Krempelvlies 15a, oder nur aus dem Vlies 26a. Alternativ kann das Vlies 19 aus zwei Lagen bestehen und dabei nur aus der Bahn aus Faserstoff 9 mit dem Krempelvlies 15a, oder nur aus der Bahn mit Fasern 9 mit dem Vlies 26a, oder nur aus dem Vlies 26a mit dem Krempelvlies 15a. Alternativ kann das Vlies 19 aus drei Lagen bestehen, nämlich aus der Bahn aus Faserstoff 9 als mittlere Lage, aus dem Krempelvlies 15a als obere Lage und aus dem Vlies 26a als untere Lage.

Es ergeben sich dabei Materialkombinationen aus synthetischen und/oder natürlichen Fasern mit unterschiedlichem Flächengewicht und mit unterschiedlicher Anzahl an Schichten und/oder einer oder zwei oder drei Lagen. Die Anlage 100 ist so konfiguriert, dass keine Überlappung oder ein paralleles Laufen von Bändern vorhanden ist, zwischen denen aufgrund Geschwindigkeitsunterschied ein Verzug des Vlieses 19 möglich ist.

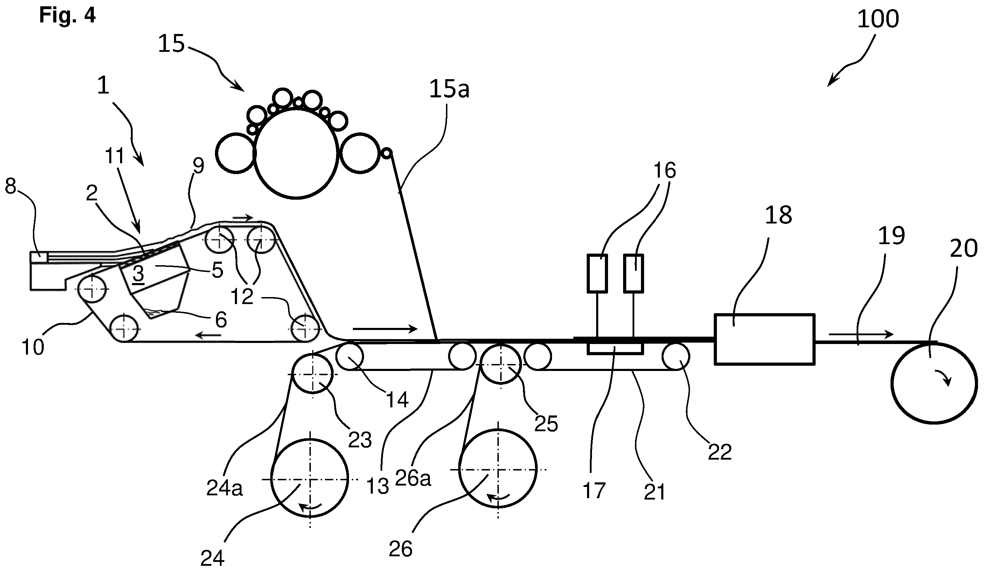

Das Ausführungsbeispiel der Figur 4 kombiniert die Ausführungsbeispiele der Figur 2 mit der Figur 3, wonach die Anlage ausgebildet ist, wahlweise ein ein- bis vierlagiges Vlies 19 herzustellen, wobei eine Lage 9 ein- oder mehrschichtig ausgebildet sein kann.

Es ergibt sich erfindungsgemäß eine flexible Anlage zur Herstellung eines ein- oder mehrschichtigen oder mehrlagigen Vlieses 19, das nur aus der Bahn aus Faserstoff 9 bestehen kann, oder nur aus dem Vlies 24a, oder nur aus dem Krempelvlies 15a, oder nur aus dem Vlies 26a.

Alternativ kann das Vlies 19 aus zwei Lagen bestehen und dabei nur aus der Bahn aus Faserstoff 9 mit dem Krempelvlies 15a, oder nur aus der Bahn mit Fasern 9 mit dem Vlies 26a, oder nur aus der Bahn mit Fasern 9 mit dem Vlies 24a, oder nur aus dem Vlies 24a mit dem Krempelvlies 15a, oder nur aus dem Vlies 24a mit dem Vlies 26a, oder nur aus dem Vlies 26a mit dem Krempelvlies 15a.

Alternativ kann das Vlies 19 aus drei Lagen bestehen, nämlich aus der Bahn aus Faserstoff 9 als mittlere Lage, aus dem Krempelvlies 15a als obere Lage und aus dem Vlies 26a als untere Lage. Weiterhin kann das Vlies 19 aus dem Vlies 24a als mittlere Lage bestehen, aus dem Krempelvlies 15a als obere Lage und dem Vlies 26a als untere Lage. Alternativ kann das Vlies 19 auch aus der Bahn aus Faserstoff 9 mit dem Vlies 24a und dem Krempelvlies 15a oder dem Vlies 26a bestehen.

Ein vierlagiges Vlies kann aus der Bahn aus Faserstoff 9 mit dem Vlies 24a als mittlere Lage und den Vliesen 26a und 15a als Decklage bestehen. Vorzugsweise beträgt das Flächengewicht des Vlieses 19 zwischen 45 bis 65 g/m².

Es ergeben sich dabei Materialkombinationen aus synthetischen oder natürlichen Fasern mit unterschiedlichem Flächengewicht und mit unterschiedlicher Anzahl an Schichten und/oder einer bis vier Lagen. Die Anlage 100 ist so konfiguriert, dass keine Überlappung oder ein paralleles Laufen von Bändern vorhanden ist, zwischen denen aufgrund Geschwindigkeitsunterschied ein Verzug des Vlieses möglich ist.

### Bezugszeichen

- 100: Anlage

- 1: Schrägsiebformer
- 2: Belag
- 3: Saugzone
- 5: Saugkasten
- 6: Siebwasser
- 8: Stoffauflauf
- 9: Faserstoff
- 10: Siebband
- 11: schräger Abschnitt
- 12: Walze
- 13: Band
- 14: Walze
- 15: Krempel
- 15a: Krempelvlies
- 16: Wasserbalken
- 17: Absaugung
- 18: Trockner
- 19: Vlies
- 20: Wickelstation
- 21: Band
- 22: Walze
- 23: Walze
- 24: Abwickelstation
- 24a: Vlies
- 25: Walze
- 26: Abwickelstation
- 26a: Vlies

## Patentansprüche

1. Anlage (100) umfassend
- einen Schrägsiebformer (1) der ausgebildet ist, eine Bahn von nassgelegtem Faserstoff (9) auf einem ersten umlaufenden Band (10) abzulegen,
- ein weiteres Band (13), das ausgebildet ist, die Bahn von nassgelegtem Faserstoff (9) von dem ersten umlaufenden Band (10) zu übernehmen,
- einer in Materialtransportrichtung nachgeordneten Krempel (15), die ausgebildet ist, ein Krempelvlies (15a) in die Anlage (100) einzuführen,
- einer in Materialtransportrichtung nachgeordneten Wasserstrahlverfestigung mit mindestens einem Wasserbalken (16), die ausgebildet ist, eine einzelne Bahn aus Fasern oder mehrere Bahnen aus Fasern zu verfestigen und/oder zu verbinden und/oder zu strukturieren,
- und einem in Materialtransportrichtung nachgeordneten Trockner (18),
wobei die Anlage ausgebildet ist, wahlweise ein ein- oder mehrlagiges Vlies (19) herzustellen, **dadurch gekennzeichnet, dass** die Anlage (100) ausgebildet ist, die Bahn aus nassgelegtem Faserstoff (9) mittels des mindestens einen Bandes (13) direkt zur Wasserstrahlverfestigung zu transportieren, wobei die Bahn aus nassgelegtem Faserstoff (9) ein- oder mehrschichtig sein kann und dass das Band (13) zum Transport der Bahn aus nassgelegtem Faserstoff (9) zumindest teilweise unterhalb der Krempel (15) angeordnet ist.

2. Anlage nach Anspruch 1, **dadurch gekennzeichnet, dass** das einlagige Vlies wahlweise aus der Bahn aus nassgelegtem Faserstoff (9) oder aus dem Krempelvlies (15a) bestehen kann.

3. Anlage nach einem der vorhergehenden Ansprüche, **dadurch gekennzeichnet, dass** in Transportrichtung der Bahn aus nassgelegtem Faserstoff (9) vor oder unterhalb des Schrägsiebformers (1) eine Abwickelstation (24) angeordnet ist, mit der alternativ zur Bahn aus nassgelegtem Faserstoff (9) ein weiteres erstes Vlies (24a) in die Anlage eingeführt werden kann.

4. Anlage nach einem der vorhergehenden Ansprüche, **dadurch gekennzeichnet, dass** zwischen dem Band (13) und dem Trockner (18) mindestens ein weiteres umlaufendes Band (21) angeordnet ist, das der Wasserstrahlverfestigung zugeordnet ist.

5. Anlage nach Anspruch 4, **dadurch gekennzeichnet, dass** nach dem Band (13) und vor der Wasserstrahlverfestigung eine weitere Abwickelstation (26) angeordnet ist, die ausgebildet ist, mindestens ein zweites Vlies (26a) in die Anlage (100) einzuführen.

6. Anlage nach Anspruch 5, **dadurch gekennzeichnet, dass** die Anlage (100) ausgebildet ist, ein einlagiges Vlies (19) herzustellen, das aus der Bahn aus nassgelegtem Faserstoff (9), oder aus dem Krempelvlies (15a) oder aus dem ersten Vlies (24a) oder aus dem zweiten Vlies (26a) bestehen kann.

7. Anlage nach Anspruch 5, **dadurch gekennzeichnet, dass** die Anlage (100) ausgebildet ist, ein zweilagiges Vlies (19) herzustellen, das aus der Bahn aus nassgelegtem Faserstoff (9) mit dem Krempelvlies (15a), oder aus der Bahn aus nassgelegtem Faserstoff (9) mit dem zweiten Vlies (26), oder dem Krempelvlies (15a) mit dem zweiten Vlies (26a), oder aus dem Krempelvlies (15a) mit dem ersten Vlies (24a), oder aus dem ersten Vlies (24a) mit dem zweiten Vlies 26a) bestehen kann.

8. Anlage nach Anspruch 5, **dadurch gekennzeichnet, dass** die Anlage (100) ausgebildet ist, ein dreilagiges Vlies (19) herzustellen, das aus der Bahn aus nassgelegtem Faserstoff (9) mit dem Krempelvlies (15a) und dem zweiten Vlies (26a), oder aus dem zweiten Vlies (26) mit dem Krempelvlies (15a) und dem ersten Vlies (24a) bestehen kann.

9. Anlage nach Anspruch 5, **dadurch gekennzeichnet, dass** die Anlage (100) ausgebildet ist, ein vierlagiges Vlies (19) herzustellen, das aus der Bahn aus nassgelegtem Faserstoff (9) mit dem ersten Vlies (24a) und dem Krempelvlies (15a) und dem zweiten Vlies (26a) als Deckschicht besteht.

10. Verfahren zum Herstellen eines ein- oder mehrlagigen Vlieses (19), bei dem eine ein- oder mehrschichtige Bahn von nassgelegtem Faserstoff (9) aus einem Schrägsiebformer (1) auf einem ersten umlaufenden Band (10) abgelegt werden kann, die nachfolgend in Materialtransportrichtung auf ein weiteres Band (13) übergeben wird, einer in Materialtransportrichtung nachgeordneten Krempel (15), die ein Krempelvlies (15a) auf dem weiteren Band (13) oder auf der Oberseite der Bahn aus nassgelegtem Faserstoff (9) ablegen kann, wobei das Verfahren ausgebildet ist, nur die Bahn von nassgelegtem Faserstoff (9) mittels des Bandes (13) zumindest teilweise unterhalb der Krempel direkt zur Wasserstrahlverfestigung zu transportieren oder nur das unverfestigte Krempelvlies (15) oder beide zusammen mittels Wasserstrahlen zu verfestigen und/oder zu strukturieren und/oder zu verbinden und nachfolgend zu trocknen.

11. Verfahren nach Anspruch 10, **dadurch gekennzeichnet, dass** das ein- oder mehrschichtige Vlies ein weiteres Vlies (24a) umfasst, das vor oder unterhalb des Schrägsiebformers (1) auf dem Band (13) abgelegt wird und das alternativ oder ergänzend zur Bahn aus nassgelegtem Faserstoff (9) mittels Wasserstrahlen verfestigt und/oder strukturiert und/oder mit dem Krempelvlies (15a) und/oder der Bahn aus nassgelegtem Faserstoff (9) verbunden und nachfolgend getrocknet wird.

12. Verfahren nach Anspruch 10 oder 11, **dadurch gekennzeichnet, dass** das ein- oder mehrschichtige Vlies ein weiteres Vlies (26a) umfasst, das nach dem Band (13) und vor der Wasserstrahlverfestigung in die Anlage eingeführt wird, wobei auf dem weiteren Vlies (26a) die Bahn aus nassgelegten Fasern (9) oder das weitere Vlies (24a) mit der Unterseite aufliegt.

## Claims

1. Installation (100) comprising
- an inclined wire former (1) which is configured to deposit a sheet of wet-laid fibre material (9) on a first circulating belt (10),
- a further belt (13) which is configured to receive the sheet of wet-laid fibre material (9) from the first circulating belt (10),
- a roller card (15) which is arranged downstream in the material transport direction and is configured to introduce a roller card web (15a) into the installation (100),
- a hydroentanglement which is arranged downstream in the material transport direction and has at least one water beam (16) and which is configured to entangle and/or bond and/or structure a single sheet of fibres or a plurality of sheets of fibres,
- and a dryer (18) arranged downstream in the material transport direction,
wherein the installation is configured to produce a single-ply or alternatively a multi-ply nonwoven (19), **characterised in that** the installation (100) is configured to transport the sheet of wet-laid fibre material (9) by means of the at least one belt (13) directly to the hydroentanglement, wherein the sheet of wet-laid fibre material (9) can be single- or multi-layer, and **in that** the belt (13) for transporting the sheet of wet-laid fibre material (9) is arranged at least in part beneath the roller card (15).

2. Installation according to claim 1, **characterised in that** the single-ply nonwoven can consist either of the sheet of wet-laid fibre material (9) or of the roller card web (15a).

3. Installation according to any one of the preceding claims, **characterised in that** there is arranged upstream of the inclined wire former (1) in the transport direction of the sheet of wet-laid fibre material (9) or beneath the inclined wire former an unwinding station (24) with which, alternatively to the sheet of wet-laid fibre material (9), a further first web (24a) can be introduced into the installation (100).

4. Installation according to any one of the preceding claims, **characterised in that** there is arranged between the belt (13) and the dryer (18) at least one further circulating belt (21) which is associated with the hydroentanglement.

5. Installation according to claim 4, **characterised in that** there is arranged downstream of the belt (13) and upstream of the hydroentanglement a further unwinding station (26) which is configured to introduce at least one second web (26a) into the installation (100).

6. Installation according to claim 5, **characterised in that** the installation (100) is configured to produce a single-ply nonwoven (19), which can consist of the sheet of wet-laid fibre material (9), or of the roller card web (15a), or of the first web (24a), or of the second web (26a).

7. Installation according to claim 5, **characterised in that** the installation (100) is configured to produce a two-ply nonwoven (19), which can consist of the sheet of wet-laid fibre material (9) with the roller card web (15a), or of the sheet of wet-laid fibre material (9) with the second web (26), or of the roller card web (15a) with the second web (26a), or of the roller card web (15a) with the first web (24a), or of the first web (24a) with the second web (26a).

8. Installation according to claim 5, **characterised in that** the installation (100) is configured to produce a three-ply nonwoven (19), which can consist of the sheet of wet-laid fibre material (9) with the roller card web (15a) and the second web (26a), or of the second web (26) with the roller card web (15a) and the first web (24a).

9. Installation according to claim 5, **characterised in that** the installation (100) is configured to produce a four-ply nonwoven (19) which consists of the sheet of wet-laid fibre material (9) with the first web (24a) and the roller card web (15a) and the second web (26a) as the cover layer.

10. Method for producing a single- or multi-ply nonwoven (19), in which a single- or multi-layer sheet of wet-laid fibre material (9) from the inclined wire former (1) can be deposited on a first circulating belt (10), which sheet is transferred downstream in the material transport direction to a further belt (13), a roller card (15) which is arranged downstream in the material transport direction and can deposit a roller card web (15a) on the further belt (13) or the upper side of the sheet of wet-laid fibre material (9), wherein the method is configured to at transport only the sheet of wet-laid fibre material (9) using the bet (13) at least partially beneath the roller card directly to the hydroentanglement or to entangle and/or structure and/or bond by means of water jets and subsequently to dry only the sheet of wet-laid fibre material (9) or only the non-entangled roller card web (15) or both together.

11. Method according to claim 10, **characterised in that** the single- or multi-layer nonwoven comprises a further web (24a), which is deposited before or beneath the inclined wire former (1) on the belt (13) and which alternatively or in addition to the sheet of wet-laid fibre material (9) is entangled and/or structured and/or bonded with the roller card web (15a) and/or the sheet of wet-laid fibre material (9) by means of water jets and subsequently dried.

12. Method according to claim 10 or 11, **characterised in that** the single- or multi-layer nonwoven comprises a further web (26a), which is introduced into the installation after the belt (13) and before the hydroentanglement, wherein the sheet of wet-laid fibres (9) or the further web (24a) with its underside rests on the further web (26a).

## Revendications

1. Installation (100) comprenant
- un façonneur à toile oblique (1), conçu pour déposer un lé de matière fibreuse (9) déposée par voie humide sur une première bande de tamis (10),
- une autre bande périphérique (13), conçue pour reprendre le lé de matière fibreuse (9) déposée par voie humide de la première bande de tamis (10),
- une carde à rouleaux (15) en aval dans le sens du transport de matière, conçue pour introduire un voile de carde (15a) dans l'installation (100),
- un dispositif de consolidation à jet d'eau en aval dans le sens du transport de matière avec au moins une rampe d'eau (16), conçu pour consolider et/ou relier et/ou structurer un seul lé de fibres ou plusieurs lés de fibres,
- et un séchoir (18) en aval dans le sens du transport de matière,
dans laquelle l'installation est conçue pour fabriquer un voile (19), au choix, mono- ou multicouche, **caractérisée en ce que** l'installation (100) est conçue pour transporter le lé de matière fibreuse (9) déposée par voie humide au moyen de l'au moins une bande périphérique (13) directement vers le dispositif de consolidation à jet d'eau, dans laquelle le lé de matière fibreuse (9) déposée par voie humide peut être mono- ou multicouche et la bande périphérique (13) de transport du lé de matière fibreuse (9) déposée par voie humide est disposée au moins partiellement en dessous de la carde à rouleaux (15).

2. Installation selon la revendication 1, **caractérisée en ce que** le voile monocouche peut être composé, au choix, du lé de matière fibreuse (9) déposée par voie humide ou du voile de carde (15a).

3. Installation selon l'une des revendications précédentes, **caractérisée en ce qu'**une station de déroulement (24) est disposée dans le sens du transport du lé de matière fibreuse (9) déposée par voie humide devant ou sous le façonneur à toile oblique (1), grâce à laquelle un autre premier voile (24a) peut être introduit dans l'installation en alternative au lé de matière fibreuse (9) déposée par voie humide.

4. Installation selon l'une des revendications précédentes, **caractérisée en ce qu'**entre la bande périphérique (13) et le séchoir (18) au moins une autre bande périphérique (21) est disposée qui est affectée au dispositif de consolidation à jet d'eau.

5. Installation selon la revendication 4, **caractérisée en ce qu'**une autre station de déroulement (26) est disposée après la bande périphérique (13) et avant le dispositif de consolidation à jet d'eau, conçue pour introduire au moins un deuxième voile (26a) dans l'installation (100).

6. Installation selon la revendication 5, **caractérisée en ce que** l'installation (100) est conçue pour réaliser un voile (19) monocouche pouvant être constitué du lé de matière fibreuse (9) déposée par voie humide ou du voile de carde (15a) ou du premier voile (24a) ou du deuxième voile (26a).

7. Installation selon la revendication 5, **caractérisée en ce que** l'installation (100) est conçue pour réaliser un voile (19) à deux couches, pouvant être constitué du lé de matière fibreuse (9) déposée par voie humide et du voile de carde (15a) ou du lé de matière fibreuse (9) déposée par voie humide et du deuxième voile (26) ou du voile de carde (15a) et du deuxième voile (26a) ou du voile de carde (15a) et du premier voile (24a) ou du premier voile (24a) et du deuxième voile (26a).

8. Installation selon la revendication 5, **caractérisée en ce que** l'installation (100) est conçue pour réaliser un voile (19) à trois couches pouvant être constitué du lé de matière fibreuse (9) déposée par voie humide et du voile de carde (15a) et du deuxième voile (26a) ou du deuxième voile (26) et du voile de carde (15a) et du premier voile (24a).

9. Installation selon la revendication 5, **caractérisée en ce que** l'installation (100) est conçue pour réaliser un voile (19) à quatre couches constitué du lé de matière fibreuse (9) déposée par voie humide et du premier voile (24a) et du voile de carde (15a) et du deuxième voile (26a) comme couche supérieure.

10. Procédé de fabrication d'un voile (19) mono- ou multicouche dans lequel un lé d'une ou plusieurs couches de matière fibreuse (9) déposée par voie humide issu d'un façonneur à toile oblique (1) peut être déposé sur une première bande de tamis (10), lé qui sera ensuite transféré dans le sens du transport de matière sur une autre bande périphérique (13), une carde à rouleaux (15) en aval dans le sens du transport de matière, qui peut déposer un voile de carde (15a) sur l'autre bande périphérique (13) ou sur la face supérieure du lé de matière fibreuse (9) déposée par voie humide, dans lequel le procédé est conçu pour transporter uniquement le lé de matière fibreuse (9) déposée par voie humide au moyen de la bande périphérique (13) au moins partiellement en dessous de la carde à rouleaux directement vers le dispositif de consolidation à jet d'eau ou de consolider et/ou de structurer et/ou de relier uniquement le voile de carde (15) non consolidé ou les deux ensemble au moyen de jets d'eau et de les sécher ensuite.

11. Procédé selon la revendication 10, **caractérisé en ce que** le voile mono- ou multicouche comprend un autre voile (24a) qui est déposé sur la bande périphérique (13) devant ou en dessous du façonneur à toile oblique (1) et qui est consolidé et/ou structuré en alternative ou en complément au lé de matière fibreuse (9) déposée par voie humide au moyen de jets d'eau et/ou relié avec le voile de carde (15a) et/ou le lé de matière fibreuse (9) déposée par voie humide et séché ensuite.

12. Procédé selon les revendications 10 ou 11, **caractérisé en ce que** le voile mono- ou multicouche comprend un autre voile (26a) qui est introduit dans l'installation après la bande périphérique (13) et avant le dispositif de consolidation à jet d'eau, dans lequel le lé de fibres (9) déposées par voie humide ou l'autre voile (24a) repose avec la face inférieure sur l'autre voile (26a).
